Europäisches Patentamt

European Patent Office

Office européen des brevets

(11) Veröffentlichungsnummer: **0 214 615**
**B1**

## (12) EUROPÄISCHE PATENTSCHRIFT

(45) Veröffentlichungstag der Patentschrift:
06.12.89

(51) Int. Cl.⁴: **G01B 21/00**

(21) Anmeldenummer: **86112220.8**

(22) Anmeldetag: **04.09.86**

(54) Wegmesseinrichtung.

(30) Priorität: **07.09.85  DE 8525587 U**

(43) Veröffentlichungstag der Anmeldung:
**18.03.87 Patentblatt 87/12**

(45) Bekanntmachung des Hinweises auf die Patenterteilung:
**06.12.89 Patentblatt 89/49**

(84) Benannte Vertragsstaaten:
**CH DE FR GB IT LI SE**

(56) Entgegenhaltungen:
**EP-A- 0 112 985**
**DE-A- 3 311 391**
**DE-A- 3 317 113**
**DE-A- 3 324 584**
**US-A- 3 833 303**
**US-A- 4 165 564**

(73) Patentinhaber: **ROBERT BOSCH GMBH, Postfach 50,
D-7000 Stuttgart 1(DE)**

(72) Erfinder: **Denker, Klaus, Dr. Dipl.-Ing., Rieslingweg 4,
D-7149 Freiberg a. N.(DE)**
Erfinder: **Peter, Oskar, Dr. Dipl.-Ing., Frauenstein 26,
D-7481 Bingen(DE)**

## Beschreibung

### Stand der Technik

Die Erfindung geht aus von einer Wegmeßeinrichtung nach der Gattung des Hauptanspruchs. Bei einer derartigen aus EP-A 0 112 985 bekannten Einrichtung ist an einem Druckmittelzylinder ein als Markierungsträger ausgebildetes Band auf das Zylinderrohr aufgebracht, und ein mit der Kraftabnahme verbundener und über den Hub verfahrbarer Lesekopf wird in geringem Abstand über dieses Band geführt. Dies bedingt, daß das Band sehr präzise auf das Zylinderrohr aufgebracht werden muß bzw. daß das Zylinderrohr und die Kraftabnahme auch bei Auftreten seitlicher Kräfte nicht gegeneinander verschoben werden dürfen. Dadurch werden an die Führung der Kraftabnahme bzw. an die Ebenheit und die Parallelität der Befestigungsfläche des Markierungsträgers hohe Anforderungen gestellt, was das Gerät verteuert.

Das Befestigen eines Skalenablesekopfes an Gleitschuhen ist bei der Meßeinrichtungen bekannt, so aus US-A 4 165 564.

### Vorteile der Erfindung

Die erfindungsgemäße Wegmeßeinrichtung mit den Merkmalen des Patentanspruchs 1 aus EP-A 0 112 985 hat demgegenüber den Vorteil, daß sie relativ einfach gestaltet und unproblematisch hinsichtlich der Erfassung der Hubwege ist. Auch sind die der Positionsmessung dienenden Teile leicht austauschbar, Verschiebungen zwischen Ablesekopf und Codierband werden vermieden.

Besonders vorteilhafte Ausgestaltungen der Erfindung ergeben sich aus den abhängigen Patentansprüchen.

### Zeichnung

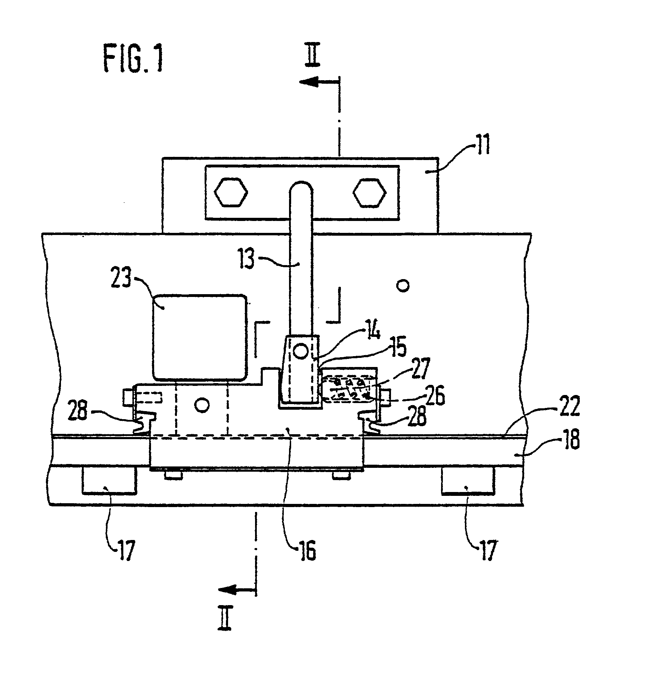

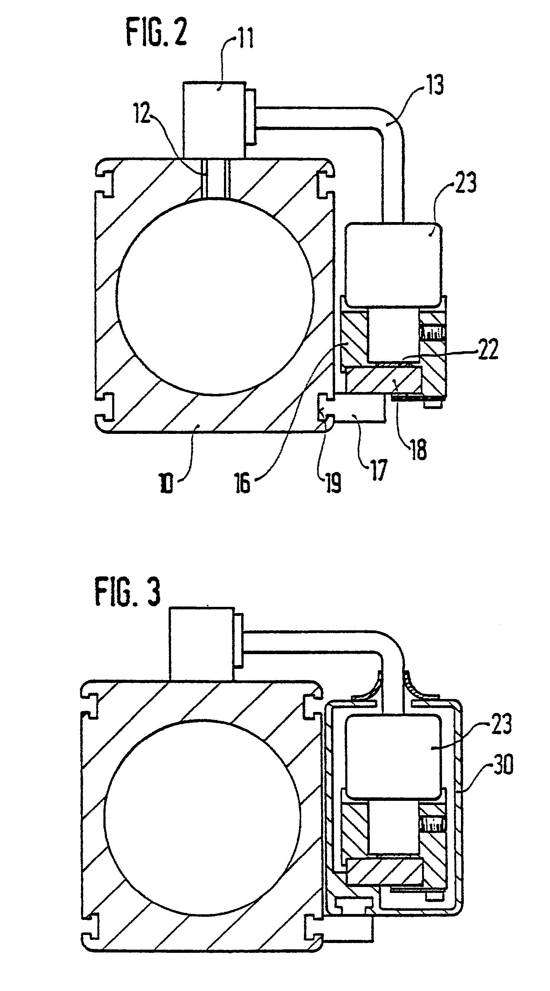

Ein Ausführungsbeispiel der Erfindung ist in der Zeichnung dargestellt und in der nachfolgenden Beschreibung wiedergegeben. Die Zeichnung zeigt in Figur 1 einen Druckmittelzylinder von der Seite in teilweiser Darstellung, Figur 2 einen Schnitt längs II-II nach Figur 1, Figur 3 eine Abwandlung des vorherigen Ausführungsbeispiels.

### Beschreibung der Ausführungsbeispiele

In einem Zylinderrohr 10 ist ein nicht dargestellter Kolben dicht gleitend geführt, an dem ein Fortsatz 11 (Kraftabnahme) befestigt ist, der durch einen im Zylinderrohr 10 ausgebildeten Schlitz 12 nach außen ragt. Die Abdichtung am Schlitz ist hier nicht dargestellt, da nicht erfindungswesentlich und im übrigen allgemein bekannt.

Am Fortsatz 11 ist ein rechtwinklig abgebogener Bügel 13 befestigt, an dessen freiem Ende sich ein Mitnehmer in Gestalt eines Gleitsteins 14 befindet, welcher mit Spiel in einen Querschlitz 15 eines Gleitschuhs 16 ragt. Der Gleitschuh 16 ist an einer Schiene 18 geführt, welche außen am Zylinderrohr an Halterungen 17 befestigt ist; diese sind in eine Längsnut 19 außen am Zylinder eingesetzt. Die Längsnut 19 läuft parallel zur Zylinderbohrung.

Auf der Schiene 18 ist ein Band 22 befestigt, das als Markierungsträger dient. Es kann z. B. als codiertes Magnetband ausgebildet sein, an dem entlang sich ein Ablesekopf 23 bewegt, der auf dem Gleitschuh 16 fest angeordnet ist. Der untere, dem Band zugewandte Teil des Ablesekopfs gleitet entweder auf diesem oder ist mit geringem Abstand gegenüber diesem geführt. Aus Obigem ist zu erkennen, daß der Gleitschuh 16 nicht starr, sondern gelenkig mit dem Fortsatz 11 verbunden ist. Das hat den Vorteil, daß der Ablesekopf keine Verlagerungen gegenüber dem Band 22 erfährt. Der in den Schlitz 15 eintauchende Mitnehmer 14 ist dort durch eine von einer Feder 26 belastete Kugel 27 kraftschlüssig verbunden. An beiden Stirnseiten des Gleitschuhs 16 sind Abstreifer 28 angeordnet, die dafür sorgen, daß das Band 22 stets sauber ist. Der Ablesekopf ist z. B. ein Magnetlesekopf, wobei dieser im Zusammenwirken mit dem Band 22 stets genau die Position des Kolbens auch während rascher Bewegung signalisiert.

Es ist möglich, auf das Band 22 zu verzichten und die Ablesespur direkt auf die Schiene 18 zu verlegen. Andererseits ist ein Band stets leicht auszuwechseln. Die beschriebene Art der Befestigungen und Anordnung ermöglicht die Koppelung und Entkoppelung von Zylinder und Meßsystem zu jedem gewünschten Zeitpunkt, sie gleicht Parallelitätsabweichungen von Bügel und Nut aus und ergibt spielfreie Mitnahme in Längsrichtung bei gleichzeitigem Ausgleich selbst von über den Kolbenhub unterschiedlichem Abstand von Forsatz 11 und Schiene bis zu mehreren Millimeter in radialer Richtung. Der Gleitschuh 16 kann auch mittels Rollen oder Kugeln auf der Schiene 18 geführt sein.

Das Ausführungsbeispiel nach Figur 3 unterscheidet sich gegenüber dem vorherigen dadurch, daß hier der Gleitschuh samt Ablesekopf in einem geschlossenen kanalartigen Gehäuse 30 angeordnet ist.

Die erfindungsgemäße Einrichtung kann auch bei anderen Maschinen angewandt werden, z. B. Werkzeugmaschinen, Hubeinrichtungen u.a.m.

### Patentansprüche

1. Wegmeßeinrichtung für einen kolbenstangenlosen Druckmittelzylinder mit einem Zylinderrohr (10), in dem ein Kolben dicht gleitend längsverschiebbar geführt ist, der eine außen am Zylinderrohr bewegliche Kraftabnahme (11) betätigt, mit einem von dieser mittels eines Bügels (13) verschiebbaren Ablesekopf (23), der berührend an einem oder im geringen Abstand vor einem als Markierungsträger dienenden Signalband (22) geführt ist, das in Längsrichtung des Zylinderrohrs und genau parallel zu diesem verlaufend in ihm befestigt ist, gekennzeichnet durch folgende Markmale

a) der Ablesekopf (23) ist an einem Gleitschuh (16) befestigt und der Bügel (13) dadurch gelenkig am Gleitschuh (16) angeordnet, daß am Bügel (13) ein Gleitstein (14) befestigt ist, der mit Spiel in einen Querschlitz (15) des Gleitschuhs (16) eingreift;

b) der Gleitschuh (16) ist an einer Führungsleiste (18) geführt, die am Zylinderrohr befestigt ist.

2. Einrichtung nach Anspruch 1, dadurch gekennzeichnet, daß sich der Gleitschuh in einem parallel zum Zylinderrohr angeordneten kanalartigen Gehäuse (30) befindet.

3. Einrichtung nach Anspruch 1 und/oder 2, dadurch gekennzeichnet, daß auf den Gleitstein eine von einer Feder (26) belastete Kugel (25) einwirkt, die im Gleitschuh angeordnet ist.

4. Einrichtung nach den Ansprüchen 1 bis 3, dadurch gekennzeichnet, daß auf der Führungsleiste (18) ein Signalband (22) mit einer optischen Hell-Dunkel-Rasterung aufgebracht oder die Führungsleiste selbst diese Rasterung trägt und der Ablesekopf (23) diese Rasterung nach einem optischen Prinzip abtastet.

5. Einrichtung nach den Ansprüchen 1 bis 3, dadurch gekennzeichnet, daß auf der Führungsleiste (18) ein Signalband mit einer Codierung aus Zonen unterschiedlicher elektrischer Leitfähigkeit aufgebracht oder die Führungsleiste selbst mit dieser Codierung versehen ist und der Ablesekopf (23) nach einem kapazitiven oder induktiven Prinzip arbeitet.

**Revendications**

1. Capteur de déplacement pour un cylindre de pression comportant un tube de vérin (10) dans lequel un piston peut se déplacer de façon étanche et coulissante, qui agit sur une prise de mouvement extérieure mobile (11) qui est guidée avec une tête de lecture (23) au moyen d'un étrier (13) venant au contact ou se trouvant à un faible intervalle d'une bande de signalisation qui est fixée dans le sens longitudinal du tube de cylindre et s'étend de façon précise parallèlement à celui-ci, caractérisé en ce que:

a) la tête de lecture (23) est fixée sur un patin coulissant (16) et l'étrier (13) est ainsi placé de façon articulée sur patin coulissant (16), en ce que sur l'étrier (13) est fixé un coulisseau (14) qui s'engage avec jeu dans une fente transversale (15) du patin coulissant (16);

b) le patin coulissant (16) est guidé sur une nervure de guidage (18) qui est fixée sur le tube de cylindre (10).

2. Dispositif selon la revendication 1, caractérisé en ce que le patin coulissant (16) se trouve dans un boîtier (30) en forme de canal disposé parallèlement au tube de cylindre.

3. Dispositif selon la revendication 1 et/ou 2, caractérisé en ce qu'une bille (27) chargée par un ressort (26) qui est placée dans le patin coulissant agit sur celui-ci.

4. Dispositif selon les revendications 1 à 3, caractérisé en ce que sur la nervure de guidage (18) est mis en place une bande de repérage (22) avec un quadrillage clair-obscur ou en ce que la nervure de guidage porte elle-même ce quadrillage et en ce que la tête de lecture (23) explore ce quadrillage selon un principe optique.

5. Dispositif selon les revendications 1 à 3, caractérisé en ce que, sur la nervure de guidage (18), est apportée une bande de repérage avec une codification à partir de zone de conductibilité électrique différente, ou la nervure de guidage elle-même est munie de cette codification et la tête de lecture travaille selon un principe inductif ou capacitif.

**Claims**

1. Path-measuring apparatus for a piston-rodless pressurized medium cylinder having a cylinder tube (10) in which a piston is guided fluid-tightly with longitudinal sliding mobility which actuates a force input (11) movable on the outside of the cylinder tube, having a reader head (23) slidable by the latter by means of a stirrup (13), which is guided in contact with or at a short interval in front of a signal band (22) serving as mark carrier, which is fastened in the cylinder tube in the longitudinal direction of the latter and extending precisely parallel to the latter, characterized by the following features

a) the reader head (23) is fastened to a slide shoe (16) and the stirrup (13) is arranged articulately on the slide shoe (16) in that a slide block (14) is fastened to the stirrup (13) and engages with play into a cross slot (15) of the slide shoe (16);

b) the slide shoe (16) is guided on a guide rail (18) which is fastened to the cylinder tube (10).

2. Apparatus according to Claim 1, characterized in that the slide shoe is located in a duct-like housing (30) arranged parallel to the cylinder tube.

3. Apparatus according to Claim 1 and/or 2, characterized in that a ball (25) is loaded by a spring (26) which is arranged in the slide shoe influences the slide block.

4. Apparatus according to Claims 1 to 3, characterized in that a signal band (22) having an optical lightdark raster is secured on the guide rail (18) or the guide rail itself carries said raster and the reader head (23) senses said raster on an optical principle.

5. Apparatus according to Claims 1 to 3, characterized in that a signal band having a coding comprising the zones of different electrical conductivity is applied on the guide rail (18), or the guide rail itself is provided with said coding and the reader head (23) operates on a capacitive or inductive principle.

FIG.1

FIG. 2

FIG. 3